# EUROPEAN PATENT SPECIFICATION

(11) **EP 1 686 049 B1**
(45) Date of publication and mention of the grant of the patent: **06.11.2013**
(21) Application number: 05075220.3
(22) Date of filing: 28.01.2005
(51) Int. Cl.: E05B 67/28, B62H 5/14, E05B 67/02

(54) **Assembly comprising a ring lock for a bicycle and a set comprising at least one cover member**
Anordnung mit einem Ringschloss für ein Fahrrad und mit mindestens einem Abdeckelement
Dispositif comprenant une bague de verrouillage pour bicyclette et un au moins un élément de recouvrement

(43) Date of publication of application: 02.08.2006
(73) Proprietor: AXA Stenman Nederland B.V., 3903 AV Veenendaal (NL)
(72) Inventor: van Wakeren, Gerrit, 3901 XA Veenendaal (NL)
(74) Representative: Jansen, Cornelis Marinus

(56) References cited:
- EP-A- 0 443 217
- WO-A-00/43623
- FR-A- 2 765 850
- GB-A- 1 555 383
- US-A- 2 647 390

## Description

The invention relates to an entirely novel assembly provided with a ring lock for a bicycle.

A ring lock for a bicycle is known per se from practice, see also EP0443217. The known ring lock is provided with a housing with two curved legs and a locking bolt for blocking a locking space extending between the legs. When the locking bolt has been brought to a blocking position, from the legs of the lock, the locking bolt can block a bicycle wheel, at least with the ring lock in a position mounted on a bicycle.

US 2,647,390 discloses a bicycle lock comprising an open faced arcuate casing, an arcuate bolt, which lock can be rigidly fixed to a bicycle mud guard. WO 00/43623 relates to a padlock.

The invention is characterised by the features of claim 1.

According to the present invention, there is provided a first set of cover members and at least a second set of cover members, such that the at least second set of cover members can be mounted on a particular position on the lock housing instead of the first set of cover members, wherein the first and second set of cover members differ with respect to each other.

The one set of cover members can be mountable on the same position the lock housing as the other set of cover members. The at least second set of cover members can for instance be mounted on a particular position on the lock housing instead of the first set of cover members. By using the cover members, in a relatively simple manner, a large variety in for instance appearance, color scheme, the design or other properties of the ring lock can be achieved. By utilizing a suitable set of cover members, the appearance of the bicycle lock can for instance be embellished or adjusted, as desired. The appearance, or other properties of the ring lock, can thus simply be adjusted specifically to, for instance, the brand, the type and/or color of the bicycle on which the lock is to be attached or on which the lock has already been attached. It is noted that each set of cover members mentioned can consist of one more suitable cover members.

Bicycles are available in many variants, colors, materials and the like. The invention comprises the insight that a drawback of the known bicycle lock is that the lock cannot be easily adjusted to, for instance, the color, the sort and/or the material of a particular bicycle to which the lock is to be mounted or has already been mounted.

Furthermore, the assembly according to the invention can yield a great logistic advantage. A set of cover members can, for instance, be provided on the lock at any desired moment in time, for instance during the production of the lock or during the final assembly when the lock is mounted on a bicycle, or even during or after delivery of the bicycle to a customer. The buyer of a bicycle can for instance decide for himself which set of cover members he wants on the lock of the bicycle. Thus, a desired bicycle/bicycle lock color combination can still be decided on at a rather advanced moment in time, for instance even at the retailers'. As a result, in theory, relatively few variants of the lock need to be available while a desired, great variety of eventual lock characteristics can be obtained through the supply of different associated cover member sets. In this manner, a stock of locks can remain limited. This latter is highly advantageous, as in practice, it appears that especially locks take up a very great portion of a storage volume of for instance a bicycle shop. By contrast, the sets of cover members mentioned can take up relatively little space during storage. Use of the different sets of cover members therefore leads to a considerable saving in storage space.

Cover members can for instance be easily exchangeable for adjusting an appearance, design, color and/or marking of the lock to the bicycle on which the lock is to be mounted or has already been mounted. A different aspect of the invention relates to a method for mounting an assembly provided with a bicycle ring lock. According to the invention, a set of cover members is then provided on a housing of the ring lock for covering at least a part of the housing. The cover members may be detachably coupled to the housing so that afterwards, a set of cover members can still be exchanged, for instance if a bicycle customer so desires. On the other hand, after mounting, a cover member may be undetachably coupled to a lock housing. The cover members can for instance cover sides of the lock housing remote from each other, to protect these sides from damage. In that case, the cover members can also serve to protect a surroundings against possible sharp edges of the lock. The cover parts can for instance serve as coat protector.

Further there is described a set provided with at least one cover member, which set is evidently suitable and intended for use in an above-mentioned assembly for covering at least the housing of a bicycle ring lock.

Further elaborations of the invention are described in the subclaims. Presently, the invention will be clarified with reference to an exemplary embodiment and the drawing. In the drawing:
Fig. 1 shows a perspective view of an exemplary embodiment of the invention, with a first set of cover members;
Fig. 2 shows a front view of the view represented in Fig. 1; and
Fig. 3 shows a similar view as Fig. 1, while a second set of cover members is represented.

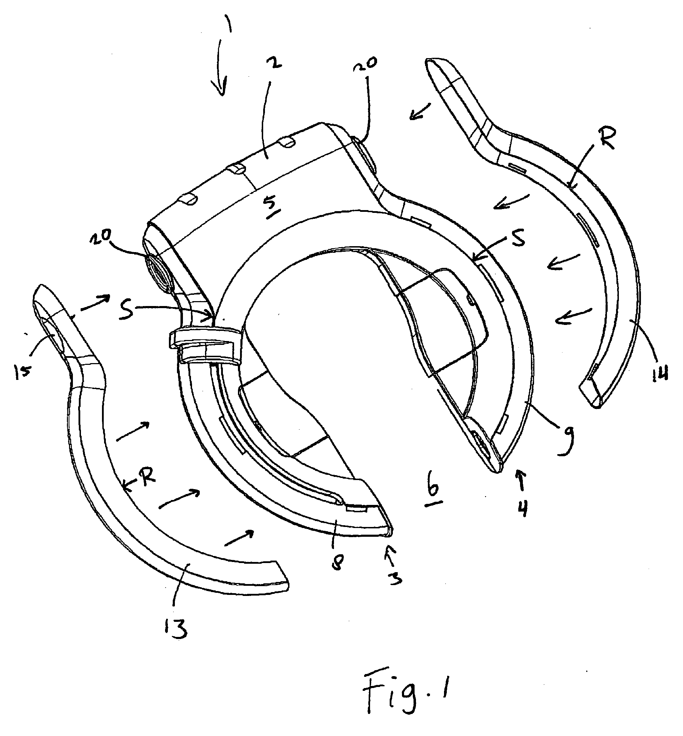

Figs. 1- 2 show an exemplary embodiment of the invention, comprising an assembly with a bicycle ring lock 1. The lock 1 is designed for blocking a wheel of the bicycle. The bicycle, or a bicycle wheel to be blocked by the lock, has not been represented in the figures. The lock 1 is provided with an annular housing 2 with two curved legs 3, 4 surrounding an annular lock guiding space. Free ends of the legs 3, 4 face a locking space 6. The lock 1 is further provided with an operable (not visible) locking bolt, a part of which can be slid, through rotation, from the guiding space into the locking space 6, and vice versa. The lock housing 2 is further provided with a middle part 5, situated between the arcuate legs 3, 4. The middle part 5 is for instance provided with a key-operated locking/unlocking mechanism (not visible in the drawing) for securing the locking bolt in a locking position and unlocking it from this position.

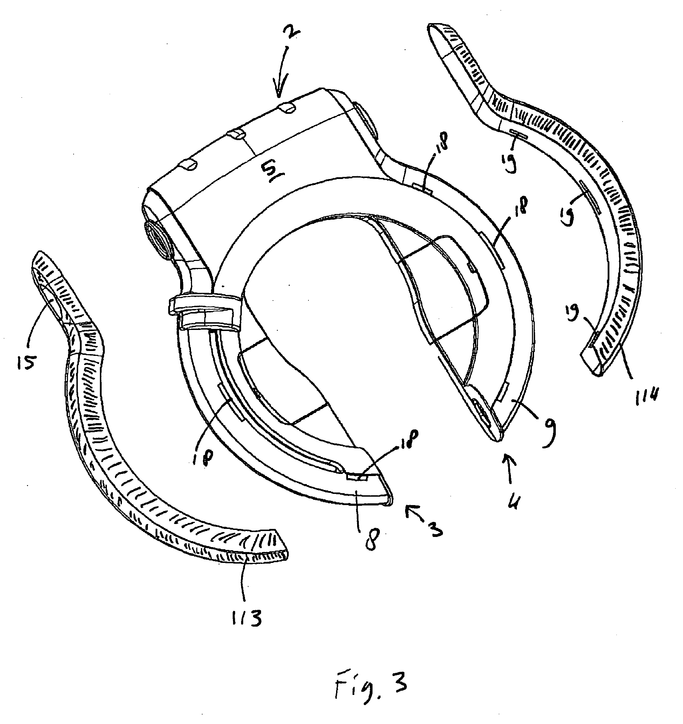

According to the invention, the assembly is provided with cover members which are mountable on suitable positions of the lock housing 2, for the purpose of covering the lock housing 2 at that location. Figs. 1 - 2 show the use of a first set of such cover members 13, 14, while Fig. 3 represents the use of a second set of cover members 113, 114.

Each set of cover members 13, 14, 113, 114 is mountable on the same position of the ring lock housing 2 for covering the housing at least partly at that location. As shown in the Figures, the second set of cover members 113, 114 is provided with other properties, color, design, depictions and/or texts than the first set of cover members. Such a difference is schematically indicated in Fig. 3 by means of a hatching. In the exemplary embodiment, for instance the color and/or the material of the second set of cover members 113, 114 is different from the color and/or the material of the first set of cover members 13, 14. The sets of cover members can differ from each other in many ways and with respect to various properties, for instance as to material properties, hardness, design, coating, finish, dimensions, logo's, brands, trade name or other printings, color, a degree of transparency and/or otherwise. The one set of cover members can for instance be manufactured from a metal or alloy, while the other set can be made of plastic.

Although the two sets of cover members of the exemplary embodiment have the same shape, in an alternative elaboration of the invention, the one set can for instance be shaped differently than the other set. For instance, the one set may be provided with cover members with rounded outsides while the other set has angular outsides. A design of cover members to be provided on the lock housing 2 can for instance be chosen such that the appearance, or the general impression of the bicycle lock is adjusted as desired, with simple means. The one set of cover member can for instance be formed such that this gives the bicycle lock and elegant look or an "old fashioned" look while, conversely, a different set of cover members give a "modern look", a sleek look and/or a streamlined shape.

As shown in the Figures, with the exemplary embodiment, the cover members 13, 14, 113, 114 of each set are mountable at least on sides of the legs 3, 4 of the ring lock remote from each other. In an alternative elaboration, the cover parts can, for instance, be mounted on different sides of the lock, for instance substantially on a front side or rear side of the lock. Further, the cover members of each set, at least in the exemplary embodiment, are designed to substantially cover sides of the legs 3, 4 remote from each other. In this manner, outer contours of the bicycle lock can for instance be designed, colored, marked and/or the like in a desired manner.

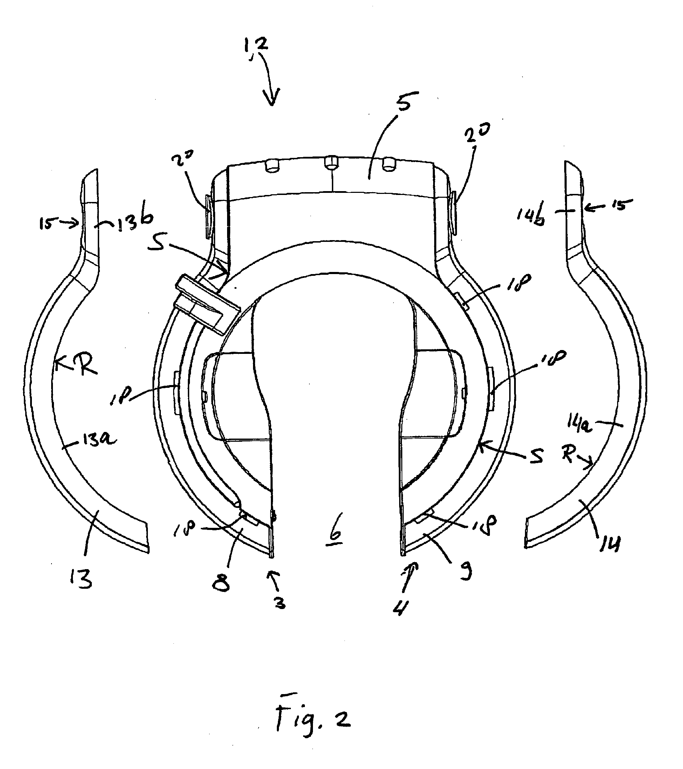

In the exemplary embodiment, each cover member 13, 14 is of channel-shaped design, at least U-shaped if viewed in cross-section, so that the cover part 13, 14 can be slid onto the lock housing 2. Each cover member 13, 14 mentioned is provided with an arcuate part 13a, 14a for covering a leg 3, 4, respectively, of the housing 2 at least partly, and with an end part 13b, 14b, for covering sides of a middle part 5 of the housing (see Fig. 2) at least partly. The cover parts 13, 14 can protect the sides of the lock against, for instance, lock-blemishing damages. In the exemplary embodiment, each end part 13b, 14b of the cover members 13, 14 is provided with a suitable passage 15. The one passage, of the left-side cover part 13 in Fig. 1, serves for instance as pin-insertion opening of an anti-theft cable to be secured on the lock during use. The other passage, not visible in the Figures, of the right-side cover member 14 in Fig. 1, serves for instance as key insertion opening for inserting a key into the bicycle lock 1.

In one aspect of the invention, each of the cover members 13, 14, 113, 114 is detachably connectable to the housing of the ring lock. In this manner, for instance a supplier can rapidly change the appearance of the lock 1 at the last moment before delivery, simply by removing the one set of cover members from the lock and providing a different set of cover members thereon. Thus, the supplier can adjust the lock to the desires of a customer in a simple manner. Naturally, such an adjustment can also be carried out by a user/owner of the assembly, for instance if he wishes to give the lock a new look. The detachable connection can be achieved in different manners, for instance simply, by means of snap connections, detachable fastening means such as screws, projection/slot engagements, clamping connections, Velcro connections and/or in a different manner. An example of snap connections 18, 19 is visible in Figs. 1 - 2. These snap connections comprise, for instance, snap slots 18, provided in the outside of the lock housing 2, and snap projections 19 which, during assembly, can snap into the snap slots 18 for coupling a cover member 13, 14, 113, 114 to the housing. Further, the end parts 13b, 14b of the cover member can for instance be snapped onto the middle part 5 of the lock housing for instance in that these passages 15 can be snapped onto projecting edges 20 of side openings of this middle part 5 (see Fig. 1).

In addition, a set of cover members can for instance be fixedly connectable to the lock housing 2, for instance by means of a suitable fastening method, a glue connection, welding connection, a screw connection, a-non reversible snap connection and/or a different type of fastening.

Moreover, a cover member can for instance be directly mountable on an outer surface of the lock housing 2, while the lock housing 2 is not specifically adjusted for receiving the cover members. As an alternative, the lock housing 2 *is* specifically adjusted for receiving cover members. In the present exemplary embodiment, the cover members 13, 14 can, for instance, be recessed in the housing 2. To this end, the outside of the lock housing 2 is provided with recesses 8, 9 in which these cover members 13, 14 fit (see Fig. 1). The recesses extend in sides remote from each other of the lock housing 2 and over a certain distance in the front and rear side of the lock housing 2 (see Figs. 1 - 2). What can thus be achieved in a simple manner is that - with the lock 1 in mounted condition - the cover members 13, 14 appear to form one whole with the lock 1. The recesses 8, 9 and the cover members 13, 14 can for instance be designed such that after mounting, edges R of the outsides of the cover members substantially link up with edges S of outsides of the lock housing. To this end, the thickness of the wall of each cover member is for instance virtually equal to the depth of the matching recess 8, 9.

In a method according to the invention, an assembly comprising a bicycle ring lock and a set of cover members is mounted to form, for instance, the assembly represented in Figs. 1 and 2. According to the method, the set of cover members 13, 14 is provided on a housing 2 of the ring lock 1 for covering at least a part of the housing 2. As shown by the Figures, the cover members 13, 14 can for instance be provided for covering only a part of the housing 2, for instance the sides of the housing 2, while a remaining part of the housing 2 still remains visible from the outside. As a result, the cover members can for instance offer additional protection to the sides of the lock, for instance against scratching, bumping or other mechanical influences. If a side of a lock - at least cover member - is damaged during use, the respective cover member provided can simply be replaced by a new cover member without the entire lock having to be taken from the bicycle.

As mentioned, the cover members can for instance be detachably coupled to the lock housing or, conversely, be fixed to the housing. In one aspect of the invention, for instance, a first cover member 13 can be provided on an outside or a first curved leg 3 of the lock housing 2 and a second cover member 14 on an outside of a second curved leg 4 of the lock housing 2. Further, the cover members can be coupled to the lock housing 2 by means of, for instance, snap connections 18, 19 or in another suitable manner mentioned hereinabove.

The two separate side covers of the lock can for instance be supplied in (an) other color(s) than the color of the lock housing 2. As a result, it is easier to satisfy customer-specific wishes as to colors and printings. Optionally, the material of the cover members can be adjusted according to the wishes of a customer. In this manner, a great freedom can be obtained for, for instance, the OEM-customer (original equipment manufacturer customer) in choice of color combinations. As mentioned, for instance, several versions of the same lock can be supplied, each with a different design side covers. As a result, a distinction can be made between the locks, for instance based on brand, manufacturer, colour, design, bicycle, bicycle type and/or the like. For instance, a racing bike can be provided with a lock 1 with ultra lightweight racing bike cover members, with ultra lightweight looking cover members or even completely without cover members, while an old fashioned family bicycle is provided with a lock with heavier cover members, or heavier looking cover members.

It is self-evident that the invention is not limited to the exemplary embodiment described. Various modifications are possible within the framework of the invention as set forth in the following claims.

For instance, each set of cover members mentioned can for instance be provided with a number of cover parts, for instance only one cover member or various cover members. The assembly may for instance be provided with one or more ring locks mentioned.

Further, a cover member can be mountable on various locations on the lock housing. In one embodiment of the invention, a cover member can for instance be mountable on a leg of the housing.

Further, in a position mounted on the housing, the cover members of each set may for instance be situated at a distance from each other, as in the exemplary embodiment represented in Figs. 1 - 3. On the other side, two cover members of one set can for instance touch, for instance when the cover members can be provided against each other on the lock housing. In the latter case, the cover members can for instance be made from one piece.

## Claims

1. An assembly provided with a ring lock to be mounted on a bicycle, the ring lock being designed for blocking a wheel of the bicycle, wherein said lock (1) is provided with an annular housing (2) with two curved legs (3, 4) surrounding a guiding space, and a locking bolt (8) for blocking a locking space extending between the legs (3, 4), **characterised in that** the assembly is provided with a set of cover members (13, 14; 113, 114), wherein the cover members are mounted on said ring lock housing (2) for covering the housing (2) at least partly, wherein the cover members (13, 14; 113, 114) of said set are mounted on sides of the legs (3, 4) of the ring lock remote from each other, wherein each said cover member (13, 14) is provided with an arcuate part (13a, 14a) for covering a respective leg (3, 4) of the housing (2), wherein said cover members of the set are designed to cover sides of the legs (3, 4) remote from each other substantially completely, wherein the outside of the lock housing (2) is provided with recesses (8, 9) in which said cover members (13, 14) fit, such that the cover members (13, 14) are recessed in the lock housing (2).

2. An assembly according to claim 1, wherein at least one of said cover members (13, 14) is provided with a passage (15).

3. An assembly according to claim 2, wherein the passage is a key insertion opening.

4. An assembly according to claim 2, wherein the passage is a pin insertion opening.

5. An assembly according to any of claims 2-4, wherein the passage is provided in an end part (13b, 14b) of each cover member (13, 14), the end part (13b, 14b) covering a side of a middle part (5) of the housing at least partly.

6. An assembly according to any one of the preceding claims, wherein each of said cover members (13, 14) is detachably connected to the housing of the ring lock.

7. An assembly according to any one of the preceding claims, wherein, in a position mounted on the lock housing (2), said at least two cover members (13, 14) are situated at a distance from each other.

8. A method for mounting an assembly according to any of claims 1-7, the method including:
- providing a first set of cover members;
- providing a second set of cover members;
- coupling one of the sets of cover members on the housing of the ring lock for covering at least a part of the housing.

9. A method according to claim 8, wherein a first cover member (13) is provided on an outside of a first curved leg (3) of the lock housing (2) and a second cover member (14) on an outside of a second curved leg (4) of the lock housing (2).

10. A method according to claim 8 or 9, wherein the cover members are coupled to the lock housing (2) by means of snap connections.

11. A method according to any of the claims 8-10, wherein the material of the second set of cover members (113, 114) is different from the material of the first set of cover members (13, 14).

12. A method according to any of the claims 8-11, wherein the sets of cover members differ from each other with respect to hardness.

13. A method according to any of the claims 8-12, wherein the sets of cover members are shaped differently with respect to each other.

14. A method according to any of the claims 8-13, wherein the at least second set of cover members is provided with other properties, design, color, depictions and/or texts than the first set of cover members.

15. A bicycle having a ring lock for blocking a wheel of the bicycle, wherein the ring lock is a ring lock of the assembly according to any of the claims 1-7.

## Patentansprüche

1. Vorrichtung, versehen mit einem auf einem Fahrrad zu montierenden Ringschloss, wobei das Ringschloss zum Blockieren eines Rads des Fahrrads konzipiert ist, wobei das Schloss (1) versehen ist mit einem ringförmigen Gehäuse (2) mit zwei gebogenen Beinen (3, 4), die einen Führungsraum umgeben, und einem Schließbolzen (8) zum Blockieren eines zwischen den Beinen (3, 4) verlaufenden Schließraums, **dadurch gekennzeichnet, dass** die Vorrichtung mit einem Satz von Abdeckelementen (13, 14; 113, 114) versehen ist, wobei die Abdeckelemente auf dem Ringschlossgehäuse (2) montiert sind, um das Gehäuse (2) zumindest teilweise abzudecken, wobei die Abdeckelemente (13, 14; 113, 114) des Satzes an den voneinander entfernten Seiten der Beine (3, 4) des Ringschlosses montiert sind, wobei jedes der Abdeckelemente (13, 14) mit einem gebogenen Teil (13a, 14a) zum Abdecken des betreffenden Beins (3, 4) des Gehäuses (2) versehen ist, wobei die Abdeckelemente des Satzes konzipiert sind, um die voneinander entfernten Seiten der Beine (3, 4) im Wesentlichen vollständig abzudecken, wobei die Außenseite des Schlossgehäuses (2) mit Vertiefungen (8, 9) versehen ist, in welche die Abdeckelemente (13, 14) so passen, dass die Abdeckelemente (13, 14) in dem Schlossgehäuse (2) eingelassen sind.

2. Vorrichtung nach Anspruch 1, wobei mindestens eines der Abdeckelemente (13, 14) mit einem Durchgang (15) versehen ist.

3. Vorrichtung nach Anspruch 2, wobei der Durchgang eine Schlüsseleinführöffnung ist.

4. Vorrichtung nach Anspruch 2, wobei der Durchgang eine Stifteinführöffnung ist.

5. Vorrichtung nach einem der Ansprüche 2 - 4, wobei der Durchgang in einem Endteil (13b, 14b) von jedem Abdeckelement (13, 14) bereitgestellt ist und das Endteil (13b, 14b) eine Seite eines Mittelteils (5) des Gehäuses zumindest teilweise abdeckt.

6. Vorrichtung nach einem der vorhergehenden Ansprüche, wobei jedes der Abdeckelemente (13, 14) abnehmbar mit dem Gehäuse des Ringschlosses verbunden ist.

7. Vorrichtung nach einem der vorhergehenden Ansprüche, wobei in einer auf dem Schlossgehäuse (2) montierten Position die mindestens zwei Abdeckelemente (13, 14) in einem Abstand voneinander angeordnet sind.

8. Verfahren zum Montieren einer Anordnung nach einem der Ansprüche 1 - 7, umfassend:
- das Bereitstellen eines ersten Satzes von Abdeckelementen;
- das Bereitstellen eines zweiten Satzes von Abdeckelementen;
- das Koppeln eines der Sätze von Abdeckelementen an das Gehäuse des Ringschlosses, um zumindest einen Teil des Gehäuses abzudecken.

9. Verfahren nach Anspruch 8, wobei ein erstes Abdeckelement (13) an einer Außenseite eines ersten gebogenen Beins (3) des Schlossgehäuses (2) und ein zweites Abdeckelement (14) an einer Außenseite eines zweiten gebogenen Beins (4) des Schlossgehäuses (2) bereitgestellt ist.

10. Verfahren nach Anspruch 8 oder 9, wobei die Abdeckelemente mittels Schnappverbindungen an das Schlossgehäuse (2) gekoppelt sind.

11. Verfahren nach einem der Ansprüche 8 - 10, wobei das Material des zweiten Satzes von Abdeckelementen (113, 114) sich von dem Material des ersten Satzes von Abdeckelementen (13, 14) unterscheidet.

12. Verfahren nach einem der Ansprüche 8 - 11, wobei die Sätze von Abdeckelementen sich hinsichtlich der Härte voneinander unterscheiden.

13. Verfahren nach einem der Ansprüche 8 - 12, wobei die Sätze von Abdeckelementen sich hinsichtlich ihrer Form unterscheiden.

14. Verfahren nach einem der Ansprüche 8 - 13, wobei der mindestens zweite Satz von Abdeckelementen andere Eigenschaften, ein anderes Design, eine andere Farbe, andere Abbildungen und/oder andere Texte als der erste Satz von Abdeckelementen aufweist.

15. Fahrrad mit einem Ringschloss zum Blockieren eines Rads des Fahrrads, wobei das Ringschloss ein Ringschloss der Vorrichtung nach einem der Ansprüche 1 - 7 ist.

## Revendications

1. Ensemble muni d'une bague de verrouillage destiné à être monté sur une bicyclette, la bague de verrouillage étant conçue pour bloquer une roue de la bicyclette, dans lequel ledit verrou (1) est prévu avec un boîtier annulaire (2) avec deux pattes incurvées (3, 4) entourant un espace de guidage, et un boulon de verrouillage (8) pour bloquer un espace de verrouillage s'étendant entre les pattes (3, 4), **caractérisé en ce que** l'ensemble est prévu avec un ensemble d'éléments de couvercle (13, 14 ; 113, 114), dans lequel les éléments de couvercle sont montés sur ledit boîtier de bague de verrouillage (2) pour recouvrir au moins partiellement le boîtier (2), dans lequel les éléments de couvercle (13, 14 ; 113, 114) dudit ensemble sont montés sur les côtés des pattes (3, 4) de la bague de verrouillage à distance les uns par rapport aux autres, dans lequel chacun desdits éléments de couvercle (13, 14) est muni d'une partie arquée (13a, 14a) pour recouvrir une patte (3, 4) respective du boîtier (2), dans lequel lesdits éléments de couvercle de l'ensemble sont conçus pour recouvrir les côtés des pattes (3, 4) à distance les uns des autres sensiblement complètement, dans lequel l'extérieur du boîtier de verrouillage (2) est doté d'évidements (8, 9) dans lesquels lesdits éléments de couvercle (13, 14) s'adaptent, de sorte que les éléments de couvercle (13, 14) sont enfoncés dans le boîtier de verrouillage (2).

2. Ensemble selon la revendication 1, dans lequel au moins l'un desdits éléments de couvercle (13, 14) est prévu avec un passage (15).

3. Ensemble selon la revendication 2, dans lequel le passage est une ouverture d'insertion de clé.

4. Ensemble selon la revendication 2, dans lequel le passage est une ouverture d'insertion de broche.

5. Ensemble selon l'une quelconque des revendications 2 à 4, dans lequel le passage est prévu dans une partie d'extrémité (13b, 14b) de chaque élément de couvercle (13, 14), la partie d'extrémité (13b, 14b) recouvrant un côté d'une partie centrale (5) du boîtier, au moins partiellement.

6. Ensemble selon l'une quelconque des revendications précédentes, dans lequel chacun desdits éléments de couvercle (13, 14) est raccordé de manière détachable au boîtier de la bague de verrouillage.

7. Ensemble selon l'une quelconque des revendications précédentes, dans lequel, dans une position montée sur le boîtier de verrouillage (2), lesdits au moins deux éléments de couvercle (13, 14) sont situés à une certaine distance l'un de l'autre.

8. Procédé pour monter un ensemble selon l'une quelconque des revendications 1 à 7, le procédé comprenant les étapes consistant à :
prévoir un premier ensemble d'éléments de couvercle ;
prévoir un second ensemble d'éléments de couvercle ;
coupler l'un des ensembles d'éléments de couvercle au boîtier de la bague de verrouillage pour recouvrir au moins une partie du boîtier.

9. Procédé selon la revendication 8, dans lequel un premier élément de couvercle (13) est prévu sur un extérieur d'une première patte incurvée (3) du boîtier de verrouillage (2) et un second élément de couvercle (14) sur un extérieur d'une seconde patte incurvée (4) du boîtier de verrouillage (2).

10. Procédé selon la revendication 8 ou 9, dans lequel les éléments de couvercle sont couplés au boîtier de verrouillage (2) au moyen de raccordements par encliquetage.

11. Procédé selon l'une quelconque des revendications 8 à 10, dans lequel le matériau du second ensemble d'éléments de couvercle (113, 114) est différent du matériau du premier ensemble d'éléments de couvercle (13, 14).

12. Procédé selon l'une quelconque des revendications 8 à 11, dans lequel les ensembles d'éléments de couvercle diffèrent l'un de l'autre par rapport à la dureté.

13. Procédé selon l'une quelconque des revendications 8 à 12, dans lequel les ensembles d'éléments de couvercle présentent des formes différentes l'un par rapport à l'autre.

14. Procédé selon l'une quelconque des revendications 8 à 13, dans lequel le au moins un second ensemble d'éléments de couvercle est doté d'autres propriétés, d'une conception différente, d'une autre couleur, d'autres illustrations et/ou d'autres textes que le premier ensemble d'éléments de couvercle.

15. Bicyclette ayant une bague de verrouillage pour bloquer une roue de la bicyclette, dans laquelle la bague de verrouillage est une bague de verrouillage de l'ensemble selon l'une quelconque des revendications 1 à 7.
